# EUROPÄISCHE PATENTSCHRIFT

(11) **EP 2 208 269 B1**
(45) Veröffentlichungstag und Bekanntmachung des Hinweises auf die Patenterteilung: **02.10.2013**
(21) Anmeldenummer: 08846356.7
(22) Anmeldetag: 24.10.2008
(51) Int. Cl.: H02B 11/24

(54) **SCHUTZVORRICHTUNG GEGEN BERÜHREN ELEKTRISCHER LEITER IN EINER STROMVERTEILEREINHEIT**
PROTECTION DEVICE FOR PROTECTING AGAINST CONTACT WITH ELECTRICAL LINES IN A POWER DISTRIBUTING UNIT
DISPOSITIF DE PROTECTION EMPECHANT LE CONTACT AVEC DES CONDUCTEURS ELECTRIQUES DANS UNE UNITE DE DISTRIBUTION ELECTRIQUE

(30) Priorität: 09.11.2007 DE 102007054295
(43) Veröffentlichungstag der Anmeldung: 21.07.2010
(73) Patentinhaber: Siemens Aktiengesellschaft, 80333 München (DE)
(72) Erfinder: CERMANN, Christian, 04229 Leipzig (DE); SCHMIDT,Mario, 04178 Leipzig (DE)
(86) Internationale Anmeldenummer: PCT/EP2008/064453
(87) Internationale Veröffentlichungsnummer: WO 2009/059905

(56) Entgegenhaltungen:
- FR-A- 2 063 448
- US-A- 1 584 623
- US-A- 5 343 355

## Beschreibung

Die Erfindung betrifft die konstruktive Gestaltung einer Schutzvorrichtung gegen Berühren elektrischer Leiter in einer Stromverteilereinheit, wobei die Stromverteilereinheit ein Einschubfach und eine in dem Einschubfach aus einer Anfangsposition in eine Endposition verschiebbare elektrische Einschubeinheit aufweist. Diese ist bei unter Spannung stehender Anlage aus dem Fach entnehmbar.

Aus der Druckschrift DE 10 2005 026 388 B3 ist eine Stromverteilereinheit mit einer Einschubeinheit (Einschub) bekannt, bei der in der Einschubeinheit ortsfest fixierte Kontakte und in der Einschubeinheit verschiebbar geführte Kontakteinheiten vorgesehen sind, wobei die verschiebbar geführten Kontakteinheiten bei in Endposition befindlicher Einschubeinheit aus einer Trenn- in eine Kontaktstellung überführbar sind. Dabei kontaktieren Kontaktelemente der verschiebbar geführten Kontakteinheiten in der Trennstellung der Kontakteinheiten nur die ortsfest fixierten Kontakte. Beim Überführen in ihre Kontaktstellung gleiten die Kontaktelemente der Kontakteinheiten an den ortsfest fixierten Kontakten entlang und gelangen zusätzlich in Kontakt mit dort gezeigten elektrischen Leitern in Form von Stromschienen (Feldschienen). Hierbei ist der Durchgriff zu den Stromschienen jederzeit offen. Somit besteht die Gefahr, dass kleinere Gegenstände in Kontakt mit den Stromschienen kommen können. - Aus der Praxis sind zwar Abdeckungen für die Feldschienen bekannt, diese weisen aber Durchtrittsöffnungen für den Durchtritt der Kontaktelemente auf und genügen daher zwar den Anforderungen der Fingersicherheit, schützen jedoch weiterhin nicht vor dem Problem des Durchtritts kleinerer Gegenstände.

Aus der Druckschrift DE 693 04 818 T2 ist als Stand der Technik eine andere Stromverteilereinheit bekannt, die ein Einschubfach in Form eines Grundrahmens, eine in dem Einschubfach aus einer Anfangsposition in eine Endposition verschiebbare elektrische Einschubeinheit in Form eines Trennschalters und eine gattungsgemäße Schutzvorrichtung gegen Berühren elektrischer Leiter in der Stromverteilereinheit aufweist. Die dort gezeigte gattungsgemäße Schutzvorrichtung weist eine im Grundrahmen quer zur Verschiebungsrichtung des Trennschalters aus einer Geschlossen-Stellung in eine Offen-Stellung verschiebbare Schutzplatte in Form einer beweglichen Verschlusslamelle und ein am Trennschalter gehaltenes Betätigungsmittel zum Verschieben der Schutzplatte in Form einer Verschlussbetätigungsplatte auf, wobei die Verschlussbetätigungsplatte beim Verschieben des Trennschalters aus seiner Anfangsposition in seine Endposition über eine Schräge auf einen Betätigungsstift der beweglichen Verschlusslamelle einwirkt und diese anhebt. - Bei dieser bekannten Schutzvorrichtung verharrt die Schutzplatte an sich bis zur öffnenden Betätigung durch das Betätigungsmittel aufgrund der Wirkung ihres Eigengewichtes in der geschlossenen Lage. Jedoch können allein schon dem Eigengewicht entgegen gerichtete Stöße, wie sie beispielsweise auf Schiffen auftreten, die Wirkung des Eigengewichtes aufheben und ohne eine öffnende Betätigung durch das Betätigungselement ein Überführen der Schutzplatte in ihre Offen-Stellung bewirken.

Ausgehend von einer Schutzvorrichtung mit den Merkmalen des Oberbegriffes des Patentanspruches 1 (DE 693 04 818 T2) liegt der Erfindung die Aufgabe zu Grunde, die Schutzvorrichtung noch sicherer zu gestalten.

Diese Aufgabe wird erfindungsgemäß dadurch gelöst, dass das Betätigungsmittel unter der Einwirkung eines Steuermittels an der Einschubeinheit aus einer Ausgangsposition in eine Endposition bewegbar ist, wobei das Betätigungsmittel bei in ihrer Endposition befindlichen elektrischen Einschubeinheit derart in die Bewegungsbahn der Schutzplatte ragt, dass die Schutzplatte zum Einen nur beim Überführen des Betätigungsmittels aus seiner Ausgangsposition in seine Endposition aus ihrer Geschlossen-Stellung in ihre Offen-Stellung und zum Anderen nur beim Überführen des Betätigungsmittels aus seiner Endposition in seine Ausgangsposition aus ihrer Offen-Stellung in ihre Geschlossen-Stellung überführbar ist.

Um die Schutzplatte auch vor dem Erreichen der Endposition der elektrischen Einschubeinheit sicher in ihrer Geschlossen-Stellung zu halten ist in vorteilhafter Ausgestaltung der neuen Schutzvorrichtung eine durch ein Sperrelement bewirkte erste Verriegelung und/oder eine durch ein Sperrmittel bewirkte zweite Verriegelung der Schutzplatte vorgesehen, wobei die Verschiebbarkeit der Schutzplatte aus der Geschlossen-Stellung in die Offen-Stellung nur bei Aufhebung der Verriegelungen gegeben ist.

Dabei kann einerseits das Sperrelement, das die erste Verriegelung der Schutzplatte bewirkt, an der Schutzplatte einstückig angeformt sein und einem ortsfest zum Einschubfach gehaltenen Anschlag gegenüberstehen, wobei zum Aufheben der ersten Verriegelung der Schutzplatte ein Ausbrechen des Sperrelementes erforderlich ist.

Andererseits kann das Sperrmittel, das die zweite Verriegelung der Schutzplatte bewirkt, am Einschubfach bewegbar gehalten und zum Aufheben der zweiten Verriegelung der Schutzplatte ein Überführen des Sperrmittels aus einer Sperr-Stellung in eine Freigabe-Stellung erforderlich sein, wobei das Sperrmittel derart in die Bewegungsbahn der Einschubeinheit ragt, dass es beim Überführen der Einschubeinheit aus ihrer Anfangsposition in ihre Endposition aus seiner Sperr-Stellung in seine Freigabe-Stellung überführbar ist.

Die neue Schutzvorrichtung ist auf einfache Weise in Stromverteilereinheiten einsetz- oder nachrüstbar, die ein Einschubfach und eine in dem Einschubfach aus einer Anfangsposition in eine Endposition verschiebbare elektrische Einschubeinheit aufweisen.

Bei Stromverteilereinheiten, bei denen die elektrischen Einschubeinheiten eine aus einer Trennstellung in eine Kontaktstellung verschiebbare Kontakteinheit aufweisen, kann auf konstruktiv einfache Weise das auf das Betätigungsmittel wirkende Steuermittel von einem zum Verschieben der Kontakteinheit dienenden Querschieber gebildet sein.

Um die Schutzplatte verliersicher zu halten und bei Aufhebung der Verriegelungen verschiebbar zu führen kann eine fest am Einschubfach fixierte Abdeckung vorgesehen sein. Dabei ist es zum optimalen Berührungsschutz vorteilhaft, wenn die Schutzplatte mit ersten Durchtrittsöffnungen und die Abdeckung mit zugeordneten zweiten Durchtrittsöffnungen versehen sind, wobei die Durchtrittsöffnungen der Schutzplatte bei in ihrer Offenstellung befindlicher Schutzplatte zum Durchtritt verschiebbarer Kontakte der Kontakteinheit fluchtend zu den zugeordneten Durchtrittsöffnungen der Abdeckung angeordnet sind.

Zur Anpassung an das für die Anordnung von elektrischen Einschubeinheiten in Niederspannungs-Schaltanlagen übliche Rastermaß können an der Abdeckung mehrere Schutzplatten in einem vorgegebenen Raster von z. B. 50mm angeordnet sein.

Die neue Schutzvorrichtung ist in den Figuren 1 bis 24 dargestellt.

Dabei zeigen:
Figur 1 eine Stromverteilereinheit mit einer Vielzahl von Einschubanordnungen
Figur 2 eine der Einschubanordnungen gemäß der Figur 1 mit einem Einschubfach und einer in dem Einschubfach aus einer Anfangsposition in eine Endposition und zurück verschiebbaren elektrischen Einschubeinheit,
Figuren 3 und 4 einen Ausschnitt der Figur 2 bei in Trenn- bzw. Kontaktstellung befindlichen Kontaktelementen der elektrischen Einschubeinheit,
Figur 5 bis 7 die Einschubanordnung gemäß der Figur 2 versehen mit einer erfindungsgemäßen Schutzvorrichtung, die eine mit Schutzplatten versehene Abdeckung, ein an der elektrischen Einschubeinheit gehaltenes Betätigungsmittel zum Verschieben einer der Schutzplatten und ein an der elektrischen Einschubeinheit gehaltenes Sperrmittel zur Verriegelung der Schutzplatte in einer Geschlossen-Stellung aufweist,
Figur 8 das Einschubfach der Einschubanordnung,
Figur 9 ein Gehäuse der elektrischen Einschubeinheit,
Figur 10 die Abdeckung,
Figur 11 eine der Schutzplatten mit einem Sperrelement zur Verriegelung der Schutzplatte in ihrer Geschlossen-Stellung,
Figur 12 eine der Schutzplatten ohne Sperrelement,
Figuren 13 und 14 die mit den Schutzplatten versehene Abdeckung,
Figuren 15 bis 17 das Sperrmittel in einer Sperr-Stellung,
Figuren 18 bis 20 das Sperrmittel in einer Freigabe-Stellung,
Figur 21 ein Steuermittel zum Einwirken auf das Betätigungsmittel und
Figuren 22 bis 26 das Einwirken des Steuermittels auf das Betätigungsmittel.

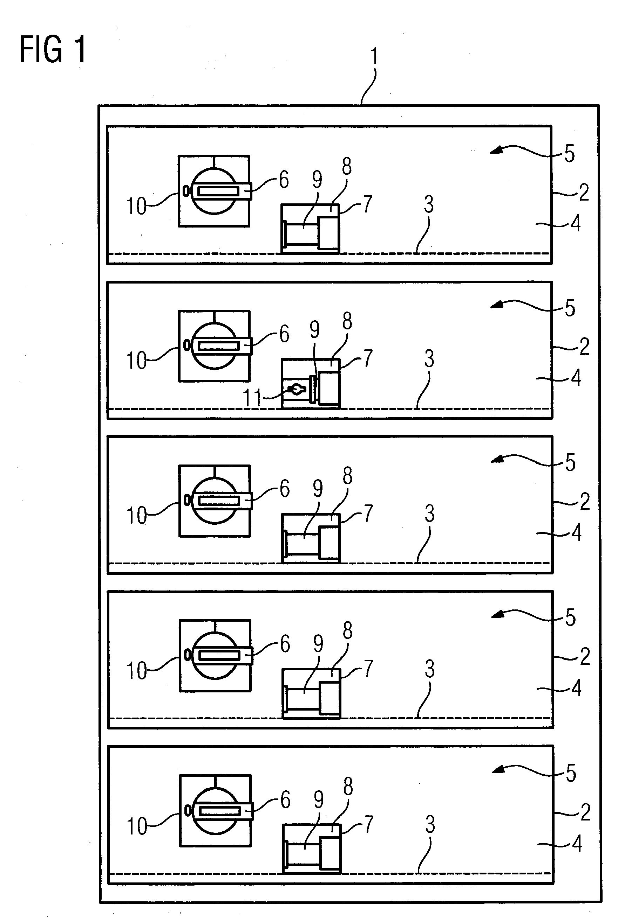

Die Figur 1 zeigt beispielhaft eine Stromverteilereinheit 1 in Form eines Schaltfeldes einer Niederspannungs-Schaltanlage mit fünf Einschubanordnungen 2, die jeweils ein Einschubfach 3 in Form eines Tragbleches und eine in einer Einschubrichtung in dem Einschubfach aus einer Anfangsposition in eine Endposition verschiebbare elektrische Einschubeinheit 4 aufweisen.

An Frontwänden 5 der elektrischen Einschubeinheiten 4 sind Handhaben 6 drehbar angeordnet. Jede der Handhaben 6 ist in nicht gezeigter Weise drehfest mit einer Kupplung einer Schaltwelle eines Hauptschalters verbindbar, um den Hauptschalter ein- und ausgeschalten zu können.

Die oberste der gezeigten Einschubanordnungen 2 zeigt eine in einer Aussparung 7 im Bereich der Frontwand 5 aufgenommene Antriebseinheit 8 in deren Frontteil ein Handschieber 9 beweglich angeordnet ist. Der Handschieber 9 befindet sich in einer Verschluss- oder Ruhestellung, bei welcher eine dahinter liegende Zugangsöffnung abgedeckt wird. Mit dem Bezugszeichen 10 ist eine Anzeigeplatte bezeichnet, welche den Schaltzustand des Hauptschalters anzeigt. Im Beispiel der Figur 1 befinden sich alle Hauptschalter im ausgeschalteten Zustand.

Bei der darunter liegenden Einschubeinheit 2 ist der Handschieber 9 nach rechts geschoben, so dass nun die dahinter liegende Zugangsöffnung 11 zum Einstecken eines Betätigungswerkzeuges sichtbar ist.

Im hinteren Teil der gezeigten Stromverteilereinheit 1 sind in dieser Darstellung nicht sichtbare elektrische Leiter in Form eingangseitiger Stromschienen und ausgangsseitiger Stromschienen in einem Stromschienenkanal benachbart zu den Einschubanordnungen 2 angeordnet. Dabei sind in dieser Darstellung ebenfalls nicht sichtbare Kontakteinheiten von Kontaktanordnungen einer jeweiligen eingeschobenen elektrischen Einschubeinheit 4 mit korrespondierenden der Stromschienen verbindbar.

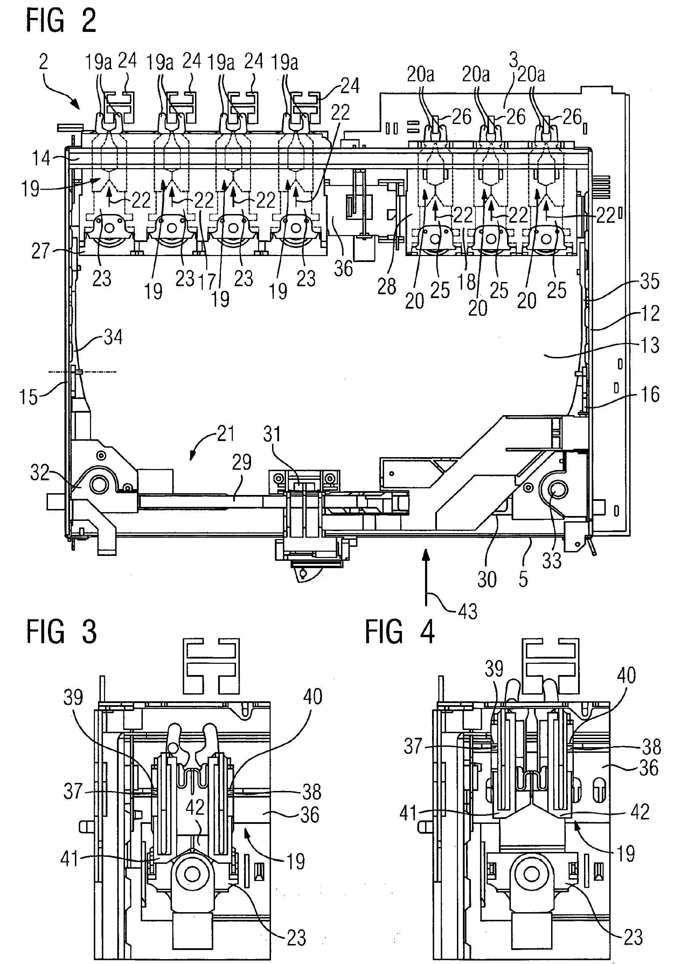

Gemäß der Figur 2, die eine der Einschubanordnungen 2 in Draufsicht zeigt, weist die elektrische Einschubeinheit 4 ein Einschubgehäuse 12 mit einer Grundplatte 13 der Frontwand 5, einer Rückwand 14 sowie zwei Seitenwänden 15, 16 auf. Mit dem Bezugszeichen 17 ist ein eingangsseitiger Teil der Kontaktanordnung und mit dem Bezugszeichen 18 eine ausgangsseitiger Teil der Kontaktanordnung bezeichnet. Die Kontaktanordnung weist eingangsseitige verschiebbare Kontakteinheiten 19 und ausgangsseitige verschiebbare Kontakteinheiten 20 sowie ein Mittel 21 zum Verschieben der Kontakteinheiten 19, 20 in der Verschiebungsrichtung 22 auf. Die Verschiebungsrichtung 22 der Kontakteinheiten beim Überführen aus einer Trennstellung in eine Kontaktstellung entspricht der Einschubrichtung der Einschubeinheit in dem Einschubfach. Die eingangsseitigen Kontakteinheiten 19 dienen zur Herstellung einer elektrischen Verbindung zwischen ortsfest im Einschubgehäuse 12 angeordneten eingangsseitigen Kontakten 23 und zugeordneten der eingangsseitigen Stromschienen 24. In gleicher Weise dienen die ausgangsseitigen Kontakteinheiten 20 zur Herstellung einer elektrischen Verbindung zwischen ortsfest im Einschubgehäuse 12 angeordneten ausgangsseitigen Kontakten 25 und zugeordneten der ausgangsseitigen Stromschienen 26.

Die Kontakteinheiten 19, 20 und das Mittel 21 zum Verschieben der Kontakteinheiten sind im Wesentlichen so aufgebaut, wie es in der Druckschrift DE 10 2005 026 388 B3 beschrieben ist. Auch die Herstellung der elektrischen Verbindung zwischen den ortsfest im Einschubgehäuse 12 angeordneten Kontakten 23, 25 und den zugeordneten der Stromschienen 24, 26 erfolgt im Wesentlichen so, wie es in der Druckschrift DE 10 2005 026 388 B3 beschrieben ist.

So bestehen auch die in der Figur 2 gezeigten Kontakteinheiten 19, 20 aus einem in dieser Darstellung nicht sichtbaren Lagerkörper, in dem Kontaktelemente 19a, 20a formschlüssig anliegend gehalten sind. Im Unterschied zu den Kontakteinheiten, wie sie aus der DE 10 2005 026 388 B3 bekannt sind, weisen die gezeigten eingangsseitigen Kontakteinheiten 19 ein gemeinsames erstes Gehäuseteil 27 und die ausgangsseitigen Kontakteinheiten 20 ein gemeinsames zweites Gehäuseteil 28 auf.

Das Mittel 21 zum Verschieben der Kontakteinheiten 19, 20 weist zwei in der elektrischen Einschubeinheit quer verlaufende Zahnstangen 29, 30 auf, die über einen Ritzel 31 zur Seite beweglich sind. In den Ritzel 31 kann dabei über die Frontwand 5 mit dem Betätigungswerkzeug eingegriffen werden. Über Eckumlenkungen 32, 33 werden Leisten 34, 35 in der Verschiebungsrichtung 22 bzw. entgegengesetzt zu dieser Verschiebungsrichtung 22 bewegt. Ein mit den Leisten 34, 35 gekoppelter Querschieber 36 bewegt sich dann entsprechend in der Verschiebungsrichtung 22 und entgegengesetzt zu dieser Verschiebungsrichtung 22. Die Kontakteinheiten 19, 20 sind dabei mittels des Querschiebers 36 in der Verschiebungsrichtung 22 geführt.

Gemäß der Figuren 3 und 4, die einen Ausschnitt der Figur 2 im Bereich der linken eingangsseitigen Kontakteinheit 19 zeigen, weist der Querschieber 36 im Unterschied zu dem Querschieber wie er aus der DE 10 2005 026 388 B3 bekannt ist, Nasen 37, 38 auf, die in seitliche Ausnehmungen 39, 40 des Lagerkörpers der Kontakteinheit 19 eingreifen. Zur leichteren Montage der Kontaktelemente ist der Lagerkörper jeweils durch zwei ineinander verrastbare Teilkörper 41, 42 gebildet, wobei in jeden der Teilkörper 41, 42 eine der Nasen 37, 38 seitlich eingreift.

Unterschiede hinsichtlich der Kontakteinheiten 19, 20 und des Mittels 21 zum Verschieben der Kontakteinheiten bestehen also im Vergleich zu den Mitteln, wie sie aus der Druckschrift DE 10 2005 026 388 B3 bekannt sind, im Wesentlichen hinsichtlich der konstruktiven Gestaltung der Fixierung der ortsfest im Einschubgehäuse 12 angeordneten Kontakte 23 und 25 und hinsichtlich des Eingriffes des Querschiebers 36 in die Lagerkörper.

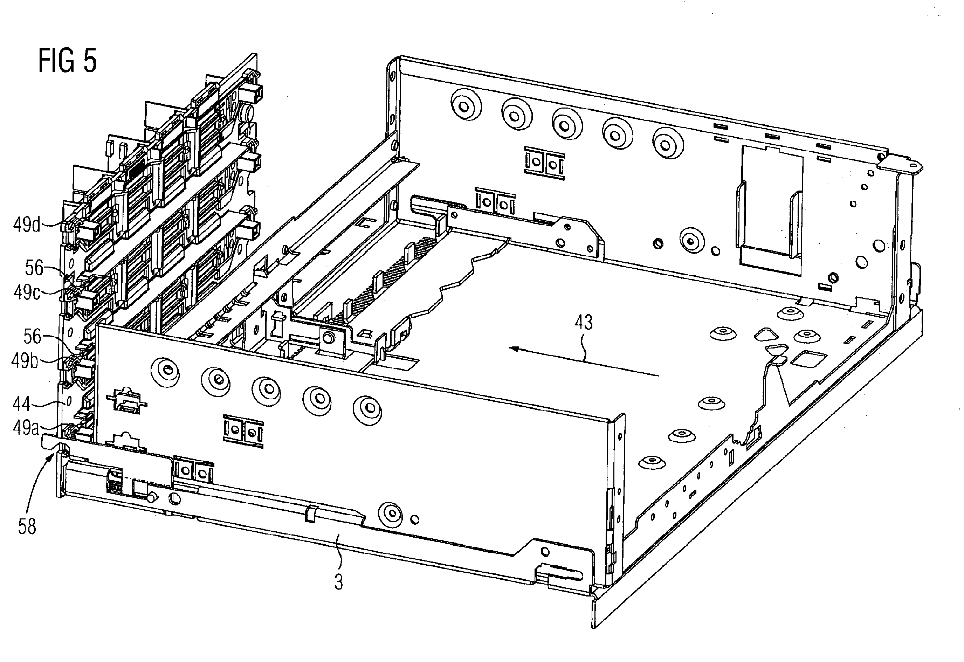

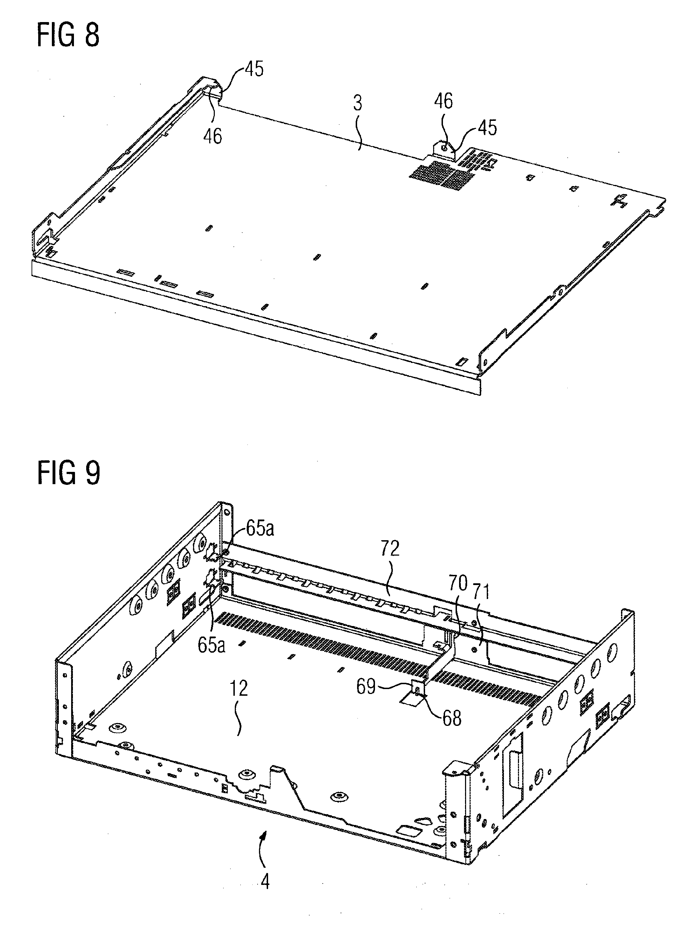

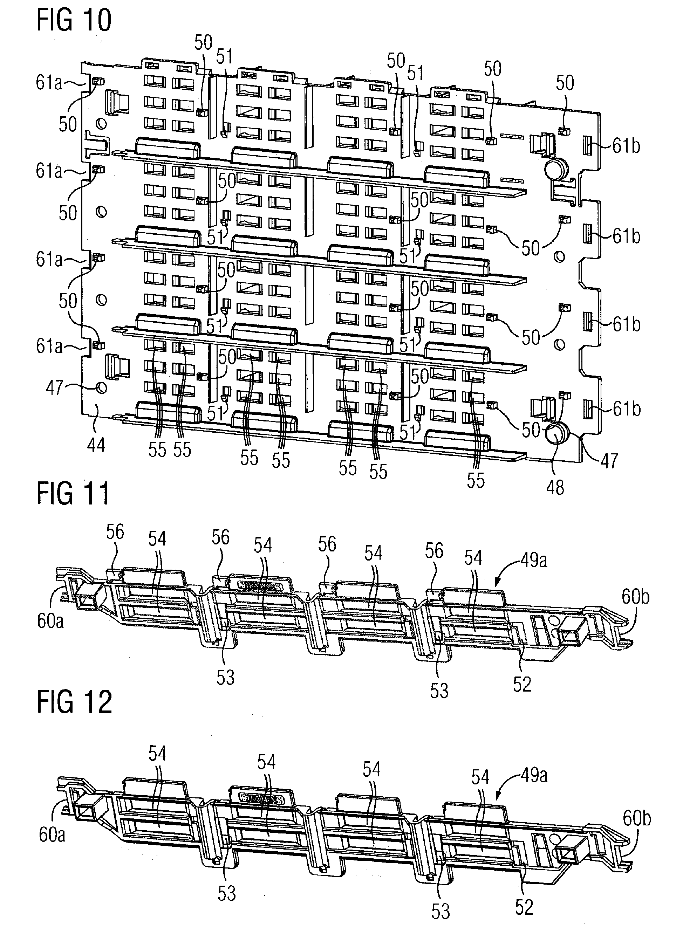

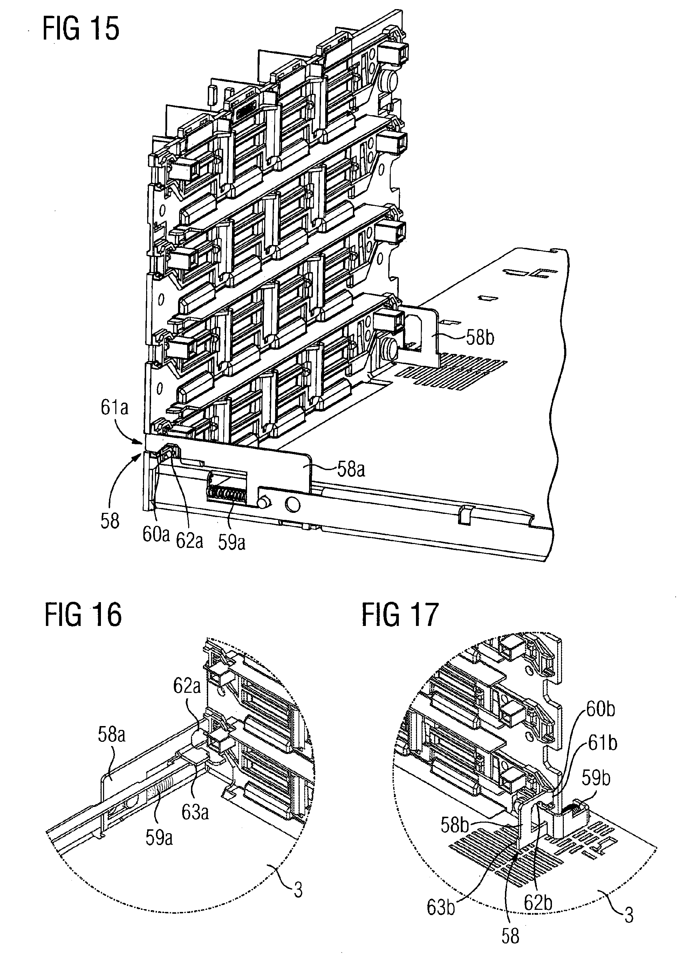

Gemäß den Figuren 5 bis 7 ist an der in der Einschubrichtung 43 weisenden Seite des als Tragblech ausgebildeten Einschubfaches 3 und zwar vor den eingangsseitigen Stromschienen 24 eine Abdeckung 44 fixiert. Hierzu weist das Tragblech gemäß der Figur 8 zwei nach oben gebogene Befestigungslaschen 45 auf. Diese Befestigungslaschen 45 und die Abdeckung 44 selbst (vgl. Figur 10) sind mit einander zugeordneten Durchgangsbohrungen 46, 47 versehen. Das Fixieren der Abdeckung 44 erfolgt auf einfache und sichere Weise durch Schrauben 48 die die einander zugeordneten Durchgangsbohrungen 46, 47 durchgreifen (vgl. auch Figur 15).

An der Abdeckung 44 sind vier Schutzplatten 49a, 49b, 49c und 49d in einem Rastermaß von 50mm verliersicher gehalten. Dieses Rastermaß von 50mm entspricht dem Rastermaß, in dem Einschubeinheiten 3 in der Stromverteilereinheit 1 angeordnet werden könnten.

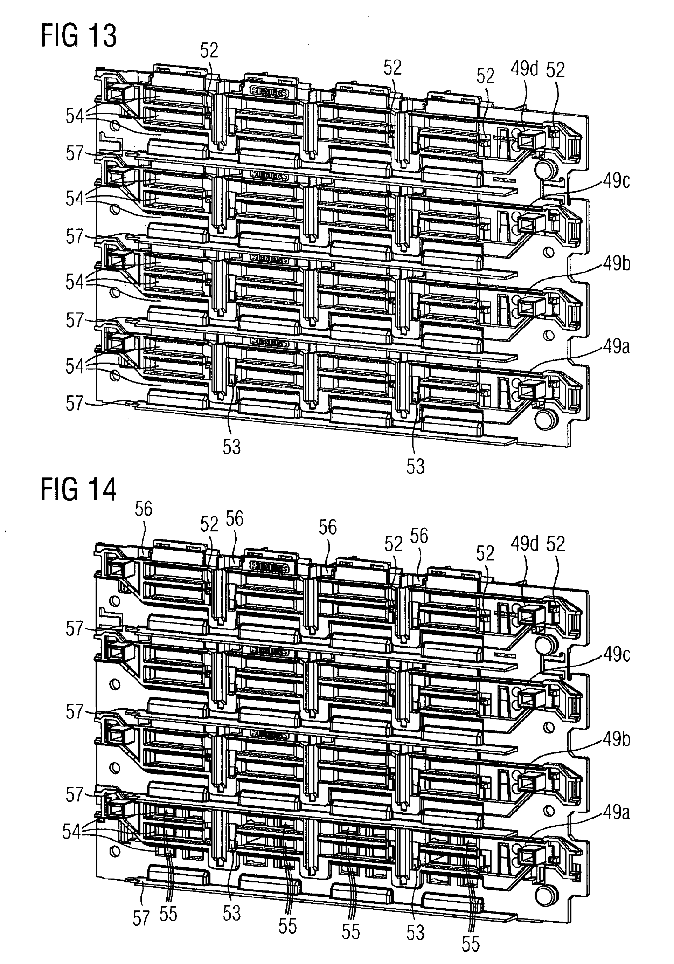

Wie insbesondere auch in der Figur 10 gezeigt, weist die Abdeckung 44 zum Halten der Schutzplatten 49a bis 49d hakenartige Führungselemente 50 und Nasen 51 auf, wobei die hakenartige Führungselemente 50 der Abdeckung 44 mit zugeordneten L-förmigen Ausschnitten 52 der Schutzplatten 49a bis 49d und die Nasen 51 der Abdeckung 44 mit zugeordneten Schnapplappen 53 der Schutzplatten 49a bis 49d zusammenwirken. Das Anbringen der Schutzplatten 49a bis 49d erfolgt dadurch, dass zunächst die hakenartigen Führungselemente 50 durch den abgewinkelten breiten Teil der L-förmigen Ausschnitte 52 gesteckt werden. Anschließend werden die Schutzplatten 49a bis 49d soweit noch oben verschoben, bis die Schutzplatten 49a bis 49d ihre in der Figur 13 gezeigte Geschlossen-Stellung erreichen, bei der die hakenartigen Führungselemente 50 eine Seitenkante der L-förmigen Ausschnitte übergreifend in den schmalen Bereich der L-förmigen Ausnehmungen eingetreten sind und die Nasen 51 der Abdeckung 44 hinter den Schnapplappen 53 der Schutzplatten 49a bis 49d verrasten sind. Ein wieder nach unten Verschieben der Schutzplatten 49a bis 49d ist nur bei vorherigem Lösen dieser Verrastung möglich.

Wie in Figur 14 am Beispiel der untersten Schutzplatte 49a gezeigt, können die Schutzplatten nach Art eines Shutters in eine Offen-Stellung überführt werden, bei der erste Durchtrittsöffnungen 54 der Schutzplatte 49a und zugeordnete zweite Durchtrittsöffnungen 55 der Abdeckung 44 zum Durchtritt der Kontaktelemente 19a der Kontakteinheiten 19 fluchtend zueinander angeordnet sind.

Am Beispiel der oberen drei Schutzplatten 49b bis 49d ist gezeigt, dass ein Verschieben der Schutzplatten nach oben in ihre Offen-Stellung jedoch blockiert, die oberen drei Schutzplatten 49b bis 49d also durch eine erste Verriegelung in ihrer Geschlossen-Stellung verriegelt sind. Diese erste Verriegelung wird durch Sperrelemente 56 bewirkt, die an den Schutzplatten 49b bis 49d einstückig angeformt sind und denen ein an der Abdeckung 44 kragträgerartig angeformter Anschlag 57 - also ein ortsfest zum Einschubfach gehaltenen Anschlag - gegenübersteht.

Die oberen drei Schutzplatten 49b bis 49d erfüllen damit die Funktion einer zusätzlichen Abdeckung, ohne die Möglichkeit den Durchgriff zu den Stromschienen 24 freizugeben. Nur die unterste Schutzplatte 49a erfüllt die Funktion eines Shutters und ist aus ihrer Geschlossen- in ihre Offen-Stellung überführbar, da die Sperrelemente 56 hier von Hand weggebrochen wurden. So zeigt die Figur 11 die Schutzplatte 49a vor dem Wegbrechen der Sperrelemente 56 und die Figur 12 zeigt die gleiche Schutzplatte 49a nach dem Wegbrechen der Sperrelemente 56.

Nur die unterste Schutzplatten 49a (Shutter) ist also durch das Aufheben der ersten Verriegelung an der Abdeckung 44 verschiebbar, sofern - wie im Weiteren beschrieben ist - auch eine zweite Verriegelung aufgehoben wird.

Prinzipiell würde die unterste Schutzplatten 49a (Shutter) zwar durch ihr Eigengewicht in der in Figur 13 gezeigten Geschlossen-Stellung verharren, bis eine öffnende Betätigung erfolgt.

Um die Geschlossen-Stellung jedoch auch ohne die Wirkung des Eigengewichtes sicherzustellen, ist gemäß der Figuren 15 bis 20 eine durch ein Sperrmittel 58 bewirkte zweite Verriegelung der untersten Schutzplatte 49a in ihrer Geschlossen-Stellung vorgesehen, wobei die Verschiebbarkeit dieser Schutzplatte 49a aus der Geschlossen-Stellung in die in der Figur 14 gezeigte Offen-Stellung nur bei Aufhebung der ersten und zusätzlich auch dieser zweiten Verriegelung gegeben ist.

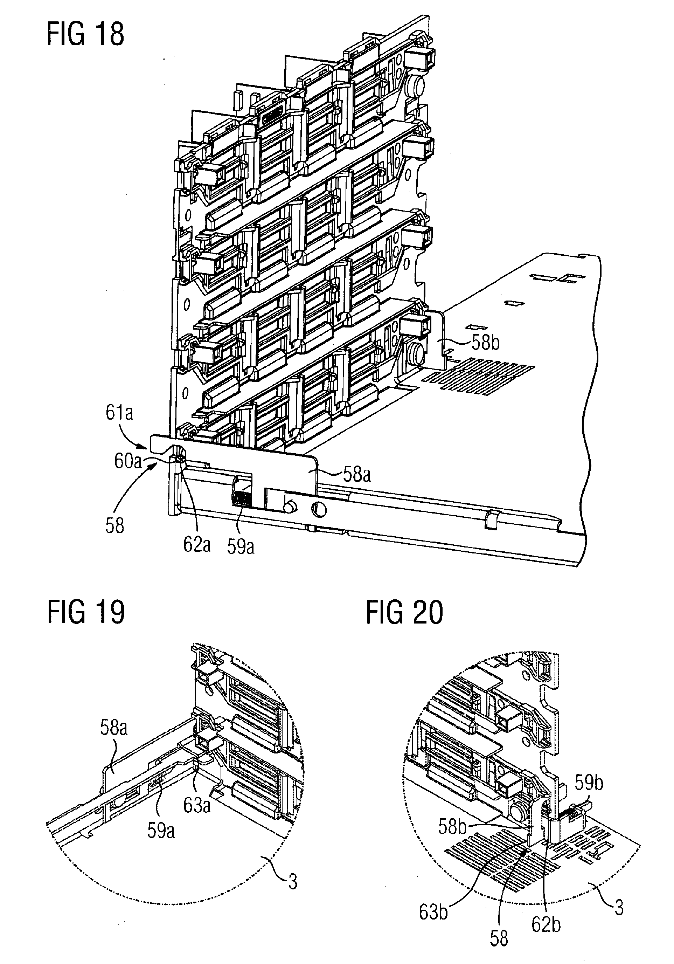

Das Sperrmittel 58 besteht aus zwei Sperrblechen 58a, 58b, die jeweils unter der Kraft einer Feder 59a, 59b am Einschubfach 3 bewegbar gehalten sind und die jeweils in zugeordnete, zueinander fluchtende Ausnehmung 60a, 61a; 60b, 61b der Schutzplatte 49a und der Abdeckung 44 eingreifen. Zum Aufheben der zweiten Verriegelung der Schutzplatten 49a ist ein Überführen der beiden Sperrbleche 58a, 58b - also ein Überführen des Sperrmittels 58 - aus einer in den Figuren 15 bis 17 gezeigten Sperr-Stellung in eine in den Figuren 18 bis 20 gezeigten Freigabe-Stellung erforderlich. Hierdurch gelang ein in Verschiebungsrichtung der Schutzplatte 49a schmaler als die Ausnehmungen 60a, 61a; 60b, 61b ausgebildeter, rückspringender Abschnitt 62a, 62b der beiden Sperrbleche 58a, 58b in den Bereich der zueinander fluchtende Ausnehmung 60a, 61a; 60b, 61b, so dass die Schutzplatte 49a an der Abdeckung 44 nunmehr ein Stück weit nach oben verschoben werden kann und zwar genau so weit, bis die Durchtrittsöffnungen 54 zu den Durchtrittsöffnungen 55 fluchten.

Die beiden Sperrbleche 58a, 58b weisen Anschlagkanten 63a, 63b auf, die derart in die Bewegungsbahn der elektrischen Einschubeinheit 4 ragen, dass die Sperrbleche 58a, 58b beim Überführen der Einschubeinheit 4 aus ihrer Anfangsposition in ihre in der Figur 5 gezeigte Endposition aus ihrer in den Figuren 15 bis 17 gezeigten Sperr-Stellung in ihre in den Figuren 18 bis 20 gezeigte Freigabe-Stellung überführt werden.

Die Sperrbleche 58a, 58b werden also beim Einschieben der elektrischen Einschubeinheit 4 in das Einschubfach 3 betätigt und geben die Bewegung der Schutzplatte 49a (des Shutters) bei eingeschobener Einschubeinheit 4 frei.

Die federgetriebenen, durch die elektrische Einschubeinheit 4 zwangsgeführten Sperrbleche 58a, 58b, die das Sperrmittel 58 bilden, verhindern somit ein vorzeitiges Öffnen der Schutzplatte 49a für den Fall, dass sich in dem Einschubfach 3 noch keine elektrische Einschubeinheit 4 ihrer Endposition befindet.

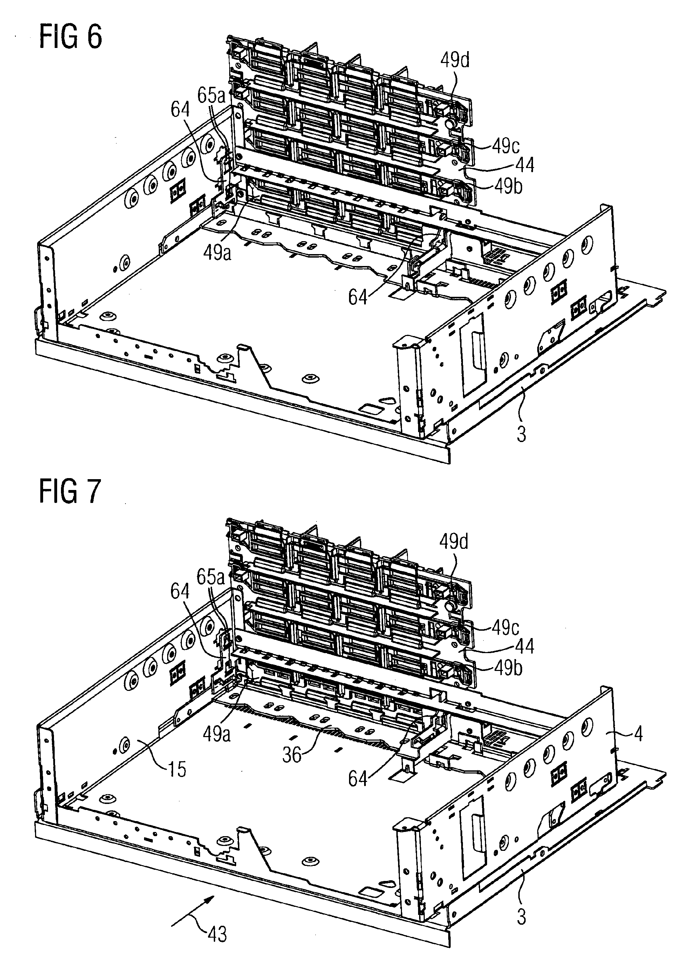

Weiterhin ist gemäß der Figuren 6 und 7 an der elektrischen Einschubeinheit 4 ein Betätigungsmittel 64 (Shutterbetätigung) zum Verschieben der untersten Schutzplatte 49a gehalten. Dieses Betätigungsmittel 64 besteht aus zwei Betätigungsblechen 64a, 64b und übernimmt schon während des Einschiebens der elektrischen Einschubeinheit 4 die Fixierung der Schutzplatte 49a (des Shutters) in ihrer Geschlossen-Stellung.

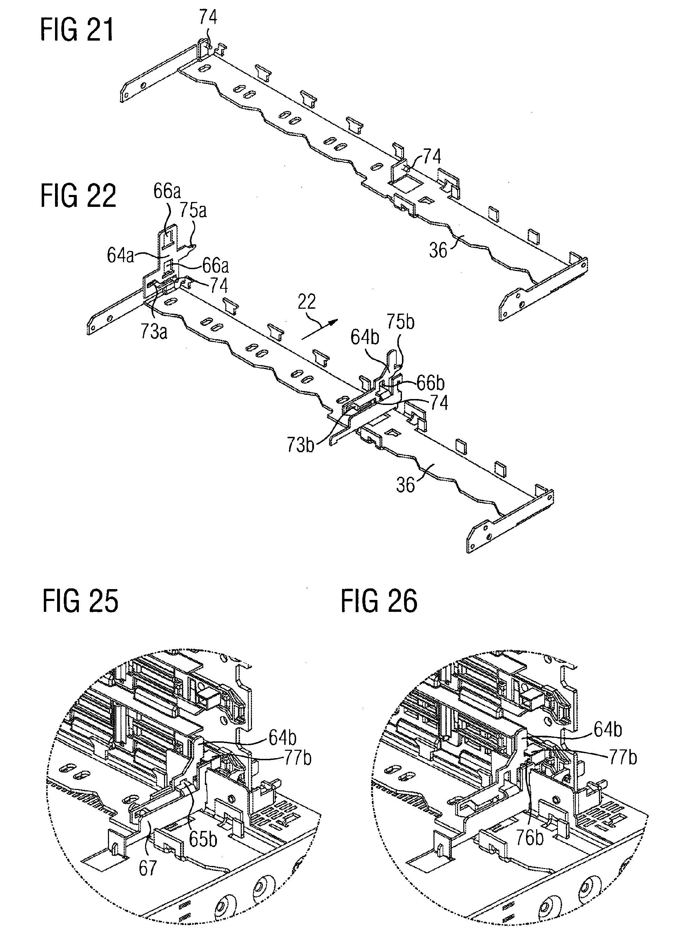

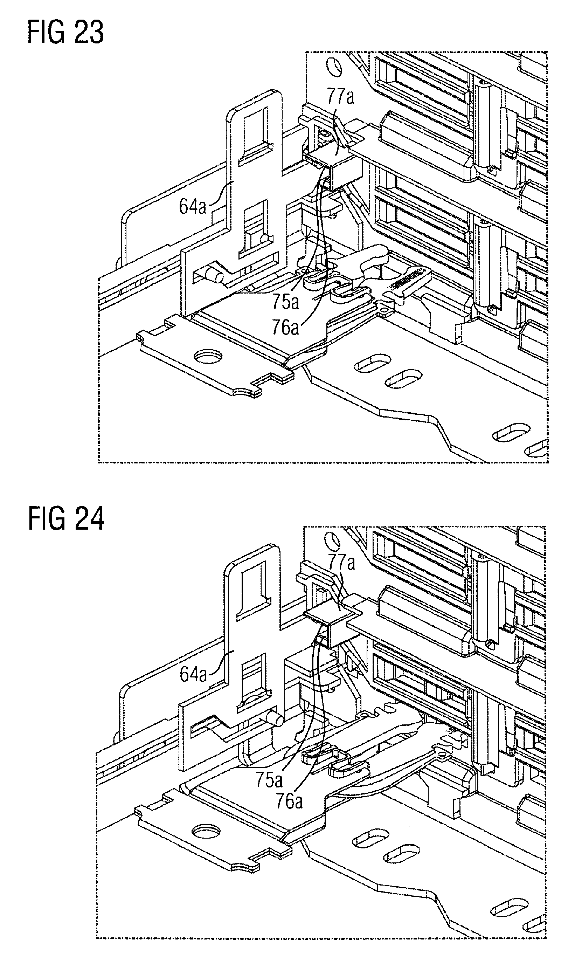

Gemäß der Figuren 22 bis 24 ist ein erstes 64a der Betätigungsbleche an Führungslaschen 65a (vgl. auch Figuren 6, 7 und 9) der elektrischen Einschubeinheit 4 verschiebbar gehalten, die aus der linken Seitenwand 15 der Einschubeinheit 4 nach innen abgebogen sind. Diese Führungslaschen 65a durchgreifen T-förmige Ausschnitte 66a des ersten Betätigungsbleches 64a. Ein zweites 64b der Betätigungsbleche ist an einer Führungslasche 65b eines Halteteils 67 der Einschubeinheit 4 verschiebbar gehalten.

Dieses Halteteil 67 ist gemäß der Figur 9 in eine ersten Ausnehmung 68 einer ersten Befestigungslasche 69 und in einen randseitig offenen Schlitz 70 einer zweiten Befestigungslasche 71 des Einschubgehäuses 12 eingesteckt und durch eine Querstrebe 72 am Einschubgehäuse fixiert. Die Führungslasche 65b des Halteteils 67 durchgreift einen L-förmigen Ausschnitt 66b des zweiten Betätigungsbleches 64b.

Das Anbringen der Betätigungsbleche 64a, 64b erfolgt dadurch, dass zunächst die Führungslaschen 65a, 65b durch den breiten Teil der T-förmigen bzw. L-förmigen Ausschnitte 66a, 66b gesteckt werden. Anschließend werden die Betätigungsbleche 64a, 64b soweit noch unten verschoben, bis sie ihre in der Figur 6 gezeigte Ausgangsposition erreichen, bei der die Führungslaschen 65a, 65b Seitenkanten der T-förmigen bzw. L-förmigen Ausschnitte 66a, 66b übergreifend in den schmalen Bereich der Ausschnitte 66a, 66b eingetreten sind.

Die Betätigungsbleche 64a, 64b weisen jeweils eine Kulisse 73a, 73b auf, in die jeweils ein am Querschieber 36 gehaltener Steuerstift 74 eingreift. Der mit den Steuerstiften 74 versehene Querschieber 36 dient somit als Steuermittel für das Betätigungsmittel 64 zum Verschieben der untersten Schutzplatte 49a. Unter der Einwirkung dieses Steuermittels ist das Betätigungsmittel 64 an der Einschubeinheit 4 aus seiner in der Figur 6 gezeigten Ausgangsposition in seine in der Figur 7 gezeigte Endposition bewegbar.

Die beiden Betätigungsbleche 64a, 64b weisen jeweils eine sich in Verschiebungsrichtung 22 weisenden Einstecknase 75a, 75b auf, die jeweils in eine Öffnung 76a, 76b einer zugeordneten, sich der Einstecknase 75a, 75b entgegenstreckenden Steckaufnahme 77a, 77b der Schutzplatte 49a einsteckbar sind.

Bei in seine Endposition befindlichen elektrische Einschubeinheit 4 ragt das Betätigungsmittel 64 mit den Einstecknasen 75a, 75b damit derart in die Bewegungsbahn der untersten Schutzplatte 49a, dass diese Schutzplatte nur beim Überführen des Betätigungsmittels 64 aus seiner in der Figur 6 gezeigten Ausgangsposition in seine in der Figur 7 gezeigte Endposition aus seiner Geschlossen-Stellung in seine Offen-Stellung und zum Anderen nur beim Überführen des Betätigungsmittels aus seiner Endposition in seine Ausgangsposition aus seiner Offen-Stellung in seine Geschlossen-Stellung überführbar ist.

Beim Verschieben des Querschiebers 36 öffnet also das Betätigungsmittel 64 die Schutzplatte 49a, um die Durchtrittsöffnungen 54, 55 zum Durchtritt der Kontakte 23 freizugeben.

Im Zustand, in dem die Kontaktelemente 19a die eingangsseitigen Stromschienen 24 kontaktieren, bleibt die Schutzplatte 49a geöffnet und wird erst beim Zurückfahren der Kontaktelemente 19a (sobald die Kontaktelemente 19a die Durchtrittsöffnungen 54, 55 passiert haben) durch das Betätigungsmittel 64 wieder zwangsgeführt geschlossen.

Beim Herausziehen der elektrischen Einschubeinheit 4 aus ihrer Endposition im Einschubfach 3 übernimmt dann wieder das am Einschubfach 3 angebrachte Sperrmittel 58 (die zwei Sperrbleche 58a, 58b) die Funktion, die Schutzplatten 49a (den Shutter) geschlossen zu halten.

Beim Einsatz der erfindungsgemäßen Schutzvorrichtung ist ein Berühren der eingangsseitigen Stromschienen 24 in Einschubfächern ohne Einschubeinheiten sicher verhindert, da eine Abdeckung der Stromschienen 24 durch die an der Abdeckung 44 gehaltenen, geschlossenen Schutzplatten 49a bis 49d vorliegt. Außerdem wird durch die Kombination aus dem am Einschubfach gehaltenen Sperrmittel 58 und dem an der Einschubeinheit gehaltenen Betätigungsmittel 64 eine jederzeit zwangsgeführte Lage der untersten Schutzplatte 49a realisiert. Dadurch, dass die unterste Schutzplatte 49a erst beim Verfahren der Kontakteinheiten 19, 20 aus der Trenn- in die Betriebsstellung geöffnet wird, ist sichergestellt, dass bei einer Störung im Stromschienenkanal der Stromverteilereinheit die Einschubeinheit 4 selbst abgeschottet ist und damit unversehrt bleibt.

## Patentansprüche

1. Schutzvorrichtung gegen Berühren elektrischer Leiter (24) in einer Stromverteilereinheit (1), wobei die Stromverteilereinheit (1) ein Einschubfach (3) und eine in dem Einschubfach (3) aus einer Anfangsposition in eine Endposition verschiebbare elektrische Einschubeinheit (4) aufweist, mit zumindest einer im Einschubfach (3) quer zur Verschiebungsrichtung (43) der elektrischen Einschubeinheit (4) aus einer Geschlossen-Stellung in eine Offen-Stellung verschiebbaren Schutzplatte (49a, 49b, 49c. 49d) und
mit einem an der elektrischen Einschubeinheit (4) gehaltenen Betätigungsmittel (64) zum Verschieben der Schutzplatte (49a)
**dadurch gekennzeichnet,**
**dass** das Betätigungsmittel (64) unter der Einwirkung eines Steuermittels an der Einschubeinheit (4) aus einer Ausgangsposition in eine Endposition bewegbar ist,
wobei das Betätigungsmittel (64) bei in ihrer Endposition befindlichen elektrischen Einschubeinheit (4) derart in die Bewegungsbahn der Schutzplatte (49a) ragt, dass die Schutzplatte (49a) zum Einen nur beim Überführen des Betätigungsmittels (64) aus seiner Ausgangsposition in seine Endposition aus ihrer Geschlossen-Stellung in ihre Offen-Stellung und zum Anderen nur beim Überführen des Betätigungsmittels (64) aus seiner Endposition in seine Ausgangsposition aus ihrer Offen-Stellung in ihre Geschlossen-Stellung überführbar ist.

2. Schutzvorrichtung nach Anspruch 1,
**dadurch gekennzeichnet, dass,**
eine durch ein Sperrelement (56) bewirkte erste Verriegelung und/oder eine durch ein Sperrmittel (58) bewirkte zweite Verriegelung der Schutzplatte (49a) vorgesehen ist, wobei die Verschiebbarkeit der Schutzplatte (49a) aus der Geschlossen-Stellung in die Offen-Stellung nur bei Aufhebung der beiden Verriegelungen gegeben ist.

3. Schutzvorrichtung nach Anspruch 2,
**dadurch gekennzeichnet, dass**
das Sperrelement (56) an der Schutzplatte (49a, 49b, 49c , 49d) einstückig angeformt ist und einem ortsfest zum Einschubfach gehaltenen Anschlag (57) gegenübersteht, wobei zum Aufheben der ersten Verriegelung der Schutzplatte (49a, 49b, 49c , 49d) ein Ausbrechen des Sperrelementes (56) erforderlich ist.

4. Schutzvorrichtung nach einem der Ansprüche 2 oder 3,
**dadurch gekennzeichnet,**
**dass** das Sperrmittel (58) am Einschubfach (3) bewegbar gehalten ist und dass zum Aufheben der zweiten Verriegelung der Schutzplatte (49a) ein Überführen des Sperrmittels (58) aus einer Sperr-Stellung in eine Freigabe-Stellung erforderlich ist,
wobei das Sperrmittel (58) derart in die Bewegungsbahn der Einschubeinheit (4) ragt, dass es beim Überführen der Einschubeinheit (4) aus ihrer Anfangsposition in ihre Endposition aus seiner Sperr-Stellung in seine Freigabe-Stellung überführbar ist.

5. Stromverteilereinheit (1) mit einem Einschubfach (3), mit einer in dem Einschubfach (3) aus einer Anfangsposition in eine Endposition verschiebbaren elektrischen Einschubeinheit (4) und mit einer Schutzvorrichtung gegen Berühren elektrischer Leiter in der Stromverteilereinheit,
**dadurch gekennzeichnet, dass**,
die Schutzvorrichtung nach einem der Ansprüche 1 bis 4 ausgebildet ist.

6. Stromverteilereinheit (1) nach Anspruch 5,
**dadurch gekennzeichnet, dass**,
die elektrische Einschubeinheit (4) zumindest eine aus einer Trennstellung in eine Kontaktstellung verschiebbare Kontakteinheit (19) aufweist,
wobei ein zum Verschieben der Kontakteinheit (19) dienender Querschieber (36) das auf das Betätigungsmittel (64) wirkende Steuermittel bildet.

7. Stromverteilereinheit nach einem der Ansprüche 5 oder 6,
**dadurch gekennzeichnet, dass**,
eine fest am Einschubfach (3) fixierte Abdeckung (44) vorgesehen ist, an der die Schutzplatte (49a, 49b, 49c, 49d) verliersicher gehalten und bei Aufhebung der Verriegelungen verschiebbar geführt ist.

8. Stromverteilereinheit nach Anspruch 7,
**dadurch gekennzeichnet, dass**,
die Schutzplatte (49a, 49b, 49c, 49d) mit ersten Durchtrittsöffnungen (54) und die Abdeckung (44) mit zugeordneten zweiten Durchtrittsöffnungen (55) versehen sind, wobei die Durchtrittsöffnungen (54) der Schutzplatte (49a, 49b, 49c, 49d) bei in ihrer Offenstellung befindlicher Schutzplatte zum Durchtritt verschiebbarer Kontaktelemente (19a) der Kontakteinheit (19) fluchtend zu den zugeordneten Durchtrittsöffnungen der Abdeckung angeordnet sind.

9. Stromverteilereinheit (1) nach einem der Anspruche 5 bis 8
**dadurch gekennzeichnet, dass,**
an der Abdeckung (44) mehrere Schutzplatten (49a, 49b, 49c, 49d) in einem vorgegebenen Raster angeordnet sind.

## Claims

1. Protection device for protecting against contact with electrical conductors (24) in a power distribution unit (1), wherein the power distribution unit (1) has an insertion bay (3) and an electrical withdrawable unit (4) which is movable in the insertion bay (3) from a starting position to an end position, comprising at least one protective plate (49a, 49b, 49c, 49d) which can be moved in the insertion bay (3) at right angles to the movement direction (43) of the electrical withdrawable unit (4) from a closed position to an open position and having an actuating means (64) retained on the electrical withdrawable unit (4) for the purpose of moving the protective plate (49a),
**characterised in that**
the actuating means (64) can be moved under the action of a control means on the withdrawable unit (4) from a starting position to an end position,
wherein with the electrical withdrawable unit (4) located in its end position the actuating means (64) projects into the movement path of the protective plate (49a) in such a way that the protective plate (49a) can on the one hand be transferred from its closed position to its open position only when the actuating means (64) is transferred from its starting position to its end position and can on the other hand be transferred from its open position to its closed position only when the actuating means (64) is transferred from its end position to its starting position.

2. Protection device according to claim 1,
**characterised in that**
a first interlock of the protective plate (49a) effected by means of a locking element (56) and/or a second interlock of the protective plate (49a) effected by a locking means (58) are provided,
wherein the protective plate (49a) can be moved from the closed position to the open position only when the two interlocks are released.

3. Protection device according to claim 2,
**characterised in that**
the locking element (56) is integrally formed on the protective plate (49a, 49b, 49c, 49d) and disposed opposite a stop (57) that is retained in a fixed position with respect to the insertion bay, wherein it is necessary to break out the locking element (56) in order to release the first interlock of the protective plate (49a, 49b, 49c, 49d).

4. Protection device according to one of claims 2 or 3,
**characterised in that**
the locking means (58) is retained in a movable manner on the insertion bay (3) and **in that** it is necessary to transfer the locking means (58) from a locking position to a release position in order to release the second interlock of the protective plate (49a),
wherein the locking means (58) projects into the movement path of the withdrawable unit (4) in such a way that it can be transferred from its locking position to its release position when the withdrawable unit (4) is transferred from its starting position to its end position.

5. Power distribution unit (1) having an insertion bay (3), comprising an electrical withdrawable unit (4) which is movable in the insertion bay (3) from a starting position to an end position and having a protection device for protecting against contact with electrical conductors in the power distribution unit,
**characterised in that**
the protection device is embodied according to one of claims 1 to 4.

6. Power distribution unit (1) according to claim 5,
**characterised in that**
the electrical withdrawable unit (4) has at least one contact unit (19) which can be moved from a break position to a contact position,
wherein a cross slide (36) serving to move the contact unit (19) forms the control means acting on the actuating means (64).

7. Power distribution unit according to one of claims 5 or 6,
**characterised in that**
a cover (44) permanently fixed to the insertion bay (3) is provided on which the protective plate (49a, 49b, 49c, 49d) is captively retained and movably guided when the interlocks are released.

8. Power distribution unit according to claim 7,
**characterised in that**
the protective plate (49a, 49b, 49c, 49d) is provided with first pass-through openings (54) and the cover (44) is provided with associated second pass-through openings (55), wherein with the protective plate located in its open position the pass-through openings (54) of the protective plate (49a, 49b, 49c, 49d) are arranged in alignment with the associated pass-through openings of the cover in order to allow the passage of movable contact elements (19a) of the contact unit (19).

9. Power distribution unit (1) according to one of claims 5 to 8,
**characterised in that**
a plurality of protective plates (49a, 49b, 49c, 49d) are disposed on the cover (44) in a predefined grid arrangement.

## Revendications

1. Dispositif de protection empêchant le contact de conducteurs électriques (24) dans une unité de distribution électrique (1), ladite unité de distribution électrique (1) comportant un compartiment d'insertion (3) et une unité électrique insérable (4) pouvant être déplacée dans le compartiment d'insertion (3) d'une position initiale vers une position finale, comprenant au moins une plaque protectrice (49a, 49b, 49c, 49d) pouvant être déplacée dans le compartiment d'insertion (3) transversalement au sens de déplacement (43) de l'unité électrique insérable (4) d'une position fermée vers une position ouverte, ainsi qu'un moyen d'actionnement (64) fixé sur l'unité électrique insérable (4), servant à déplacer la plaque protectrice (49a),
**caractérisé en ce que**
le moyen d'actionnement (64), sous l'action d'un moyen de commande prévu sur l'unité insérable (4), peut être amené d'une position initiale dans une position finale,
le moyen d'actionnement (64), lorsque l'unité électrique insérable (4) est dans sa position finale, faisant saillie dans la trajectoire de la plaque protectrice (49a) de telle sorte que la plaque protectrice (49a), d'une part, ne peut être amenée de sa position fermée dans sa position ouverte que lors du passage du moyen d'actionnement (64) de sa position initiale à sa position finale et, d'autre part, ne peut être amenée de sa position ouverte dans sa position fermée que lors du passage du moyen d'actionnement (64) de sa position finale à sa position initiale.

2. Dispositif de protection selon la revendication 1,
**caractérisé en ce que**
il est prévu un premier verrouillage de la plaque protectrice (49a) assuré par un élément de blocage (56) et/ou un deuxième verrouillage de celle-ci assuré par un moyen de blocage (58), le déplacement de la plaque protectrice (49a) de la position fermée vers la position ouverte n'étant possible que lorsque les deux verrouillages sont supprimés.

3. Dispositif de protection selon la revendication 2,
**caractérisé en ce que**
l'élément de blocage (56) est formé d'un seul tenant sur la plaque protectrice (49a, 49b, 49c, 49d) et fait face à une butée (57) maintenue fixe par rapport au compartiment d'insertion, la suppression du premier verrouillage de la plaque protectrice (49a, 49b, 49c, 49d) nécessitant une rupture de l'élément de blocage (56).

4. Dispositif de protection selon l'une des revendications 2 ou 3,
**caractérisé en ce que**
le moyen de blocage (58) est maintenu mobile sur le compartiment d'insertion (3) et **en ce qu'**un passage du moyen de blocage (58) d'une position de blocage à une position de libération est nécessaire pour supprimer le deuxième verrouillage de la plaque protectrice (49a),
le moyen de blocage (58) faisant saillie dans la trajectoire de l'unité insérable (4) de telle sorte qu'il puisse passer de sa position de blocage à sa position de libération lorsque l'unité insérable (4) passe de sa position initiale à sa position finale.

5. Unité de distribution électrique (1) comprenant un compartiment d'insertion (3), une unité électrique insérable (4) pouvant être déplacée dans le compartiment d'insertion (3) d'une position initiale vers une position finale ainsi qu'un dispositif de protection empêchant le contact de conducteurs électriques dans l'unité de distribution électrique,
**caractérisée en ce que** le dispositif de protection est conçu selon l'une des revendications 1 à 4.

6. Unité de distribution électrique (1) selon la revendication 5,
**caractérisée en ce que**
l'unité électrique insérable (4) comporte au moins une unité de contact (19) pouvant être déplacée d'une position de coupure vers une position de contact,
une coulisse transversale (36) servant à déplacer l'unité de contact (19) formant le moyen de commande qui agit sur le moyen d'actionnement (64).

7. Unité de distribution électrique selon l'une des revendications 5 ou 6,
**caractérisée en ce que**
il est prévu un cache (44) fixé solidement au compartiment d'insertion (3), cache sur lequel la plaque protectrice (49a, 49b, 49c, 49d) est maintenue de façon imperdable et guidée de façon coulissante lorsque les verrouillages sont supprimés.

8. Unité de distribution électrique selon la revendication 7,
**caractérisée en ce que**
la plaque protectrice (49a, 49b, 49c, 49d) est pourvue de premières ouvertures de passage (54) et le cache (44) est pourvu de deuxièmes ouvertures de passage associées (55), les ouvertures de passage (54) de la plaque protectrice (49a, 49b, 49c, 49d), lorsque ladite plaque est en position ouverte, étant disposées dans l'alignement des ouvertures de passage associées du cache afin de permettre le passage d'éléments de contact déplaçables (19a) de l'unité de contact (19).

9. Unité de distribution électrique (1) selon l'une des revendications 5 à 8,
**caractérisée en ce que** plusieurs plaques protectrices (49a, 49b, 49c, 49d) sont disposées sur le cache (44) selon une trame prédéfinie.
